# FASCICULE DE BREVET EUROPEEN

(11) **EP 3 458 414 B1**
(45) Date de publication et mention de la délivrance du brevet: **14.10.2020**
(21) Numéro de dépôt: 17723126.3
(22) Date de dépôt: 16.05.2017
(51) Int. Cl.: C01B 32/19, C01B 32/225

(54) **PROCEDE D'EXFOLIATION DE PARTICULES**
VERFAHREN ZUM ABSCHUPPEN VON PARTIKELN
METHOD FOR EXFOLIATING PARTICLES

(30) Priorité: 18.05.2016 FR 1654418
(43) Date de publication de la demande: 27.03.2019
(73) Titulaire: Université Grenoble Alpes, 38400 Saint-Martin-d'Hères (FR)
(72) Inventeur: AYELA, Frédéric, 73000 Chambery (FR); COLOMBET, Damien, 38400 Saint-Martin-D'Heres (FR)
(74) Mandataire: Bronchart, Quentin
(86) Numéro de dépôt international: PCT/EP2017/061726
(87) Numéro de publication internationale: WO 2017/198665

(56) Documents cités:
- US-A1- 2002 054 995
- US-A1- 2015 239 741
- MIN YI - ZHLGANG SHEN . JINYANG ZHU ED - CHEN XIAO-YA ET AL: "A fluid dynamics route for producing graphene and its analogues", SCIENCE BULLETIN, vol. 59, no. 16, 4 avril 2014 (2014-04-04) , pages 794-799, XP008180820, ISSN: 2095-9273, DOI: 10.1007/S11434-014-0303-9 [extrait le 2014-04-04]
- DATABASE WPI Week 201220 Thomson Scientific, London, GB; AN 2011-Q35851 XP002766720, -& CN 102 249 222 A (UNIV BEIJING AERONAUTICS & ASTRONAUTICS) 23 novembre 2011 (2011-11-23)
- BALDYGA J ET AL: "Agglomerate dispersion in cavitating flows", CHEMICAL ENGINEERING RESEARCH AND DESIGN, ELSEVIER, AMSTERDAM, NL, vol. 87, no. 4, 1 avril 2009 (2009-04-01), pages 474-484, XP026005301, ISSN: 0263-8762, DOI: 10.1016/J.CHERD.2008.12.015 [extrait le 2009-01-23]
- DATABASE WPI Week 201545 Thomson Scientific, London, GB; AN 2015-381702 XP002766721, -& WO 2015/099457 A1 (LG CHEM CO LTD) 2 juillet 2015 (2015-07-02)
- PEICHENG LUO ET AL: "Dispersion of single-walled carbon nanotubes by intense turbulent shear in micro-channels", CARBON., vol. 68, 1 mars 2014 (2014-03-01), pages 610-618, XP055323818, GB ISSN: 0008-6223, DOI: 10.1016/j.carbon.2013.11.040

## Description

### DOMAINE TECHNIQUE

L'invention concerne un procédé d'exfoliation de particules en suspension dans un fluide soumis à des contraintes de cisaillement et à de la cavitation.

### ÉTAT DE LA TECHNIQUE ANTÉRIEURE

Un procédé d'exfoliation de particules, telles que des particules de graphite, connu de l'état de la technique et décrit dans le brevet US 2015/0239741 comprend l'introduction d'un fluide porteur chargé desdites particules dans un réacteur à cavitation. Le réacteur à cavitation est par exemple le dispositif décrit au paragraphe §[0058] et aux figures 3a et 3b de la demande US 2015/0239741.

Selon ce procédé connu de l'état de la technique, dès lors que le fluide porteur chargé en particules est introduit dans le réacteur à cavitation en marche, des bulles de cavitation sont formées. L'exfoliation des particules est alors déclenchée par une onde de choc générée par l'implosion desdites bulles de cavitation.

Ainsi, ce procédé connu de l'état de la technique, appliqué au graphite, permet de former des particules de graphène présentant une épaisseur comprise par exemple entre 10 et 20 nm. Les particules de graphène se présentent sous forme de micro feuillets comprenant un nombre réduit de plans mono atomiques de carbone graphite.

L'épaisseur desdites particules de graphène est mesurée selon une direction perpendiculaire aux plans monoatomiques de carbone graphite.

La publication de Min Yi et al., « A fluid dynamics route for producing graphene and its analogues », J. Chin. Sci. Bull., 2014, 59, 1794, divulgue un procédé de fabrication de graphène et de ses analogues par cavitation et cisaillement en flux turbulent d'une suspension comprenant du graphite.

La demande de brevet CN 102249222 propose également un procédé d'exfoliation par génération de bulles de cavitation. Le procédé, ainsi proposé, comprend l'écoulement d'un fluide chargé en particules, ledit écoulement étant adapté pour générer des bulles de cavitation dans ledit fluide chargé en particules de sorte qu'une exfoliation des particules soit provoquée sous l'action d'une onde de choc générée par l'implosion des particules.

Cependant, les procédés relatifs à la publication de Min Yi *et al.,* et aux demandes US 2015/0239741 et CN 102249222, ne sont pas satisfaisants.

En effet, les contraintes apportées par la cavitation du fluide porteur ne permettent pas d'atteindre l'efficacité requise pour ce type de procédé.

Par ailleurs, la distribution en taille des particules formées, par le procédé d'exfoliation selon l'état de la technique, est trop importante.

En outre, les procédés connus de l'état de la technique ne permettent pas d'ajuster la taille des particules formées, et plus particulièrement ne permettent pas d'obtenir de grandes tailles (par exemple de taille supérieure à 1 µm)

Enfin, de tels procédés connus de l'art antérieur nécessitent souvent de grandes quantités de fluide porteur, excluant ainsi l'utilisation de fluides toxiques.

Un but de l'invention est de proposer un procédé d'exfoliation présentant une efficacité améliorée par rapport aux procédés connus de l'état de la technique.

### EXPOSÉ DE L'INVENTION

Le but de l'invention est résolu par un procédé d'exfoliation de particules, le procédé comprend l'écoulement, selon un premier débit, d'un fluide porteur chargé en particules, dans une première section, puis dans une deuxième section d'un conduit, la première section et la deuxième section étant contiguës, le premier débit étant adapté pour générer des contraintes de cisaillement et des bulles de cavitation dans le fluide porteur chargé en particules lors de son passage dans la première section du conduit, la seconde section du conduit présentant un diamètre hydraulique adapté pour provoquer une implosion des bulles de cavitation dès lors que le fluide porteur chargé en particules débouche de la première section et s'écoule dans la seconde section, de sorte qu'une exfoliation des particules soit provoquée sous l'action combinée des contraintes de cisaillements et d'une onde de choc générée par l'implosion des bulles de cavitation, la première section du conduit présentant un diamètre hydraulique inférieur à 300 µm, de préférence inférieur à 150 µm, encore plus préférentiellement inférieur à 90 µm, et le premier débit est adapté pour que l'écoulement du fluide porteur chargé en particules dans la première section soit laminaire. Ainsi, le procédé selon l'invention permet de réaliser l'exfoliation de particules en suspension dans un fluide porteur en écoulement dans le conduit en imposant une pression à l'écoulement beaucoup plus faible que ce qui est connu de l'état de la technique. En effet, pour un diamètre hydraulique inférieur à 300 µm, il peut être envisagé d'exercer une pression sur le fluide porteur en écoulement inférieure à 20 bars, de préférence inférieure à 10 bars. Plus particulièrement, pour un diamètre hydraulique inférieur à 150 µm, une pression exercée sur le fluide porteur comprise entre 6 et 8 bars est suffisante pour mettre en œuvre le procédé selon l'invention.

Par ailleurs, la première section, du fait de son faible diamètre hydraulique, représente un volume confiné, par rapport à ce qui est connu de l'état de la technique. Ce confinement impose alors un plus grand nombre de bulles de cavitation, et de taille plus petite par rapport à l'état de l'art. Ainsi, l'implosion des bulles de cavitation crée, du fait de la petite taille desdites bulles, une onde de choc de moindre intensité par rapport à l'état de la technique. Par conséquent, ladite onde de choc permet d'assister l'exfoliation due au cisaillement, sans pour autant briser les plans exfoliés (les plans de graphène par exemple). Il est ainsi possible d'obtenir des particules exfoliées de plus grande taille que celles obtenues par les procédés connus de l'état de la technique (par plus grande taille nous entendons plus grande étendue selon le plan d'exfoliation). La qualité des particules exfoliées s'en trouve améliorée. Par conséquent, une amélioration de l'efficacité du procédé peut être observée. Il peut également être avantageux pour la section transversale de la première section de présenter une forme allongée (par forme allongée nous entendons une forme longue, effilée). La forme allongée de la section transversale peut être définie par son rapport d'aspect. Ainsi, la section transversale peut présenter une forme allongée avec un rapport d'aspect supérieur à 3. Selon un tel rapport d'aspect, il est possible d'obtenir un confinement selon une seule dimension, et par conséquent de fabriquer un grand nombre de premières sections sur un même dispositif ou sur une même puce. Contrairement à ce que l'homme du métier aurait pu envisager, le traitement d'une plus grande quantité de particules à exfolier ne passe pas nécessairement par l'augmentation du volume du conduit (dimensionnement à la hausse).

Par forme allongé, on entend une forme s'étendant selon une direction. Autrement dit, une première dimension de la forme est supérieure une seconde dimension de ladite forme, la première dimension étant perpendiculaire à la seconde dimension.

En outre, la réduction du diamètre hydraulique permet également d'augmenter les contraintes de cisaillement s'exerçant sur les particules à exfolier.

De surcroit, un écoulement laminaire permet également d'augmenter l'amplitude des contraintes de cisaillement (par opposition à un écoulement essentiellement turbulent).

Enfin, dans un écoulement laminaire confiné, les contraintes de cisaillement ne sont pas uniquement localisées au niveau des parois de la première section, et s'exercent donc sur une plus grande fraction de fluide porteur que ce qui est observé pour un écoulement turbulent. L'écoulement laminaire permet ainsi d'améliorer le rendement par rapport aux procédés connus de l'état de la technique.

Selon un mode de réalisation, la première section de conduit présente une section transversale de forme allongée de rapport d'aspect supérieur à 3.

Selon un mode de réalisation avantageux, la pression imposée au fluide porteur s'écoulant selon le premier débit dans la première section est inférieure à 30 bars, préférentiellement inférieure à 10 bars, par exemple comprise entre 5 et 9 bars, préférentiellement entre 6 et 8 bars.

Selon un mode de réalisation alternatif, le premier débit est adapté pour que l'écoulement du fluide porteur chargé en particules dans la première section soit turbulent.

Selon un mode de mise en œuvre, le premier débit est adapté pour que les bulles de cavitation formées dans le fluide porteur chargé en particules présentent une taille inférieure à 50 µm.

Selon un mode de mise en œuvre, le fluide porteur a une viscosité supérieure ou égale à 1 mPa.s, par exemple, le fluide porteur comprend au moins un des éléments choisi parmi : eau, butanol, isopropanol, N - Méthyle - 2 pyrolidone (NMP), acétone, toluène.

Ainsi, le procédé selon l'invention permet l'emploi de fluides porteurs présentant une viscosité plus importante, sans nécessairement recourir à des systèmes de pompage plus puissants pour imposer un débit d'écoulement audit fluide porteur.

Par ailleurs, nombre de fluides porteurs dont la viscosité est supérieure à 1 mPa.s peuvent présenter une toxicité avérée. Contrairement aux procédés connus de l'état de la technique, le procédé d'exfoliation selon la présente invention ne nécessite que de très faibles quantités de fluide porteur, ouvrant ainsi la voie à l'utilisation de fluides porteurs toxiques.

Selon un mode de mise en œuvre, les particules comprennent au moins un des éléments choisi parmi : graphite, dichalcogénures de métaux de transition.

Selon un mode de mise en œuvre, le premier débit est supérieur à 1 litre par heure.

Selon un mode de mise en œuvre, la section transversale de la première section de conduit est circulaire, rectangulaire, triangulaire, ou trapézoïdale..

Selon un mode de mise en œuvre, la première section présente une longueur inférieure à 5 mm.

Selon un mode de réalisation, le fluide porteur, préalablement à son écoulement dans la première section, est engazé.

Ainsi, le nombre de bulles de cavitation augmente par rapport à une fluide non engazé.

L'invention concerne également un procédé d'exfoliation de particules, le procédé comprend l'écoulement, selon un premier débit, d'un fluide porteur chargé en particules, dans une première section, puis dans une deuxième section d'un conduit, la première section et la deuxième section étant contiguës, le premier débit étant adapté pour générer des contraintes de cisaillement et des bulles de cavitation dans le fluide porteur chargé en particules lors de son passage dans la première section du conduit, la seconde section du conduit présentant un diamètre hydraulique adapté pour provoquer une implosion des bulles de cavitation dès lors que le fluide porteur chargé en particules débouche de la première section et s'écoule dans la seconde section, de sorte qu'une exfoliation des particules soit provoquée sous l'action combinée des contraintes de cisaillements et d'une onde de choc générée par l'implosion des bulles de cavitation, la première section du conduit présente un diamètre hydraulique inférieur à 300 µm, de préférence inférieur à 150 µm, encore plus préférentiellement inférieur à 90 µm, et en ce que le premier débit est adapté pour que l'écoulement du fluide porteur chargé en particules dans la deuxième section soit laminaire.

L'invention concerne également un dispositif d'exfoliation de particules comportant un conduit, le conduit comprenant une première section, et une deuxième section reliées de manière étanche de sorte qu'un fluide puisse s'écouler de la première section vers la seconde section, la première section présentant un premier diamètre hydraulique, et la seconde section présentant un second diamètre hydraulique supérieur au premier diamètre hydraulique, le premier diamètre hydraulique étant inférieur à 300 µm, de préférence inférieur à 150 µm, encore plus préférentiellement inférieur à 90 µm, et la première section de conduit présente une section transversale de forme allongée de rapport d'aspect supérieur à 3.

Selon un mode de réalisation, une pompe ou un système à air comprimé est connectée au dispositif, ladite pompe ou ledit système à air comprimé étant adapté pour générer un écoulement d'un fluide de la première section vers la seconde section.

### BRÈVE DESCRIPTION DES DESSINS

D'autres caractéristiques et avantages apparaîtront dans la description qui va suivre du procédé d'exfoliation selon l'invention, donnés à titre d'exemples non limitatifs, en référence aux dessins annexés dans lesquels :
- la figure 1 est une représentation schématique d'un conduit 1 comprenant une première section 2 et une seconde section 3 pour le mise en œuvre du procédé selon l'invention ;
- la figure 2 est une représentation de l'agencement des plans carbonés (P1, P2 et P3) dans le graphite ;
- la figure 3 est une illustration des contraintes de cisaillement présentes lors d'un écoulement d'un fluide dans un conduit, le sens et la direction de l'écoulement sont symbolisés par la flèche F, la distribution des vitesses d'écoulement du fluide dans le conduit est illustrée par les flèches Vᵢ ;

- la figure 4 est un exemple de mise en œuvre du procédé d'exfoliation selon l'invention ;
- la figure 5a est une image de particules exfoliées, selon le procédé d'exfoliation de la présente invention (positions A, B, et C), l'image étant obtenue par microscopie à force atomique (AFM), tandis que le graphique 5b représente le profil des particules, en particulier l'axe vertical représente l'épaisseur en nm, et l'axe horizontal représente l'étendue des particules en µm ;
- les figures 6a à 6c sont des images de particules exfoliées selon le procédé d'exfoliation de la présente invention, les images étant obtenues par microscopie électronique à transmission (TEM) ;
- la figure 7 est une représentation graphique du nombre de particules, exfoliées selon le procédé d'exfoliation, (selon l'axe vertical) en fonction de leur taille (selon l'axe horizontal en micromètre).

### EXPOSÉ DÉTAILLÉ DE MODES DE RÉALISATION PARTICULIERS

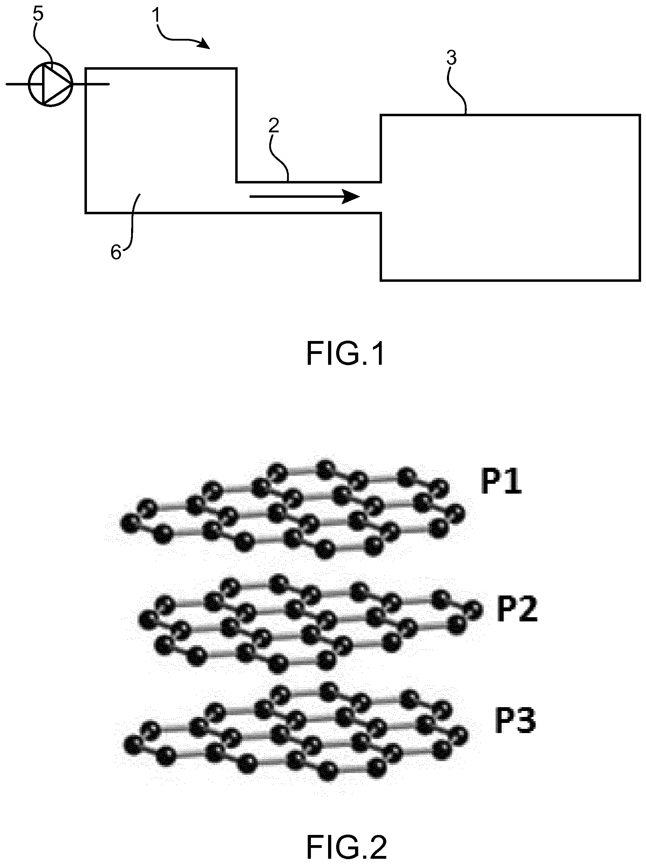

En référence aux figures 1 et 2, nous allons donc décrire un procédé d'exfoliation de particules selon un premier mode de réalisation.

Un procédé d'exfoliation de particules selon la présente invention comprend la fourniture d'un fluide porteur chargé en particules.

Le fluide porteur peut présenter une fraction volumique solide inférieure à 5 %. Par fraction volumique solide, nous entendons le volume de la phase solide sur le volume total de la suspension.

La taille des particules peut être comprise entre 0,1 µm et 50 µm, par exemple 5 µm.

Les particules sont adaptées pour être exfoliées lors de la mise en œuvre du procédé selon l'invention.

Par particules adaptées pour être exfoliées, nous entendons détacher par feuilles ou par lamelles la surface desdites particules.

L'exfoliation des particules peut être générée par application d'une énergie, supérieure à une énergie prédéterminée, au niveau desdites particules.

De manière générale, les particules susceptibles d'être exfoliées peuvent comprendre une structure cristallographique lamellaire, plus particulièrement, lesdites particules peuvent comprendre l'empilement de feuillets constitués de plans monoatomiques. A cet égard, des particules comprenant une structure cristallographique lamellaire seront exfoliées selon une direction parallèle auxdits plans mono atomiques.

Dans le cas de particules comprenant une structure lamellaire, l'énergie prédéterminée correspond à l'énergie de liaison entre les feuillets. Plus particulièrement, l'ordre de grandeur de l'énergie de liaison entre deux plans de graphite est de 10 kJ/mol (cette énergie peut également être exprimée pour un atome : 120 meV/atome).

A cet égard, les particules peuvent comprendre au moins un élément choisi parmi : graphite, dichalcogénures de métaux de transition.

Le procédé selon l'invention ne se limite cependant pas aux particules présentant une structure cristallographique lamellaire.

Le fluide porteur peut comprendre de l'eau. Cependant, nous verrons, dans la suite de l'exposé de l'invention, qu'il est possible d'utiliser d'autres types de fluides porteurs.

Le procédé d'exfoliation selon l'invention comprend l'écoulement du fluide porteur chargé des particules à exfolier dans un conduit 1. Le fluide porteur s'écoule dans le conduit 1 dans le sens et la direction indiqués par la flèche représentée sur la figure 1.

Le conduit 1 comprend au moins une première section 2 et une seconde section 3.

La première section 2 peut présenter une section transversale de forme circulaire ou rectangulaire ou triangulaire, ou trapézoïdale, sans toutefois se limiter aux formes citées.

La première section 2 peut présenter une section transversale de forme allongée (par forme allongée nous entendons une forme longue, effilée). La forme allongée de la section transversale peut être définie par son rapport d'aspect. Ainsi, la section transversale peut présenter une forme allongée avec un rapport d'aspect supérieur à 3 (« aspect ratio » selon la terminologie Anglo-Saxonne). Selon un tel rapport d'aspect, il est possible d'obtenir un confinement selon une seule dimension, et par conséquent de fabriquer un grand nombre de premières sections sur un même dispositif ou sur une même puce.

La seconde section 3 peut présenter une section transversale de forme circulaire ou rectangulaire, ou triangulaire, ou trapézoïdale, sans toutefois se limiter aux formes citées.

La première section 2 et la seconde section 3 sont contiguës et reliées de manière étanche de sorte que le fluide porteur chargé des particules s'écoule de la première section 2 vers la seconde section 3.

Avant d'être injecté dans la première section 2 du conduit 1, le fluide porteur chargé en particules peut se trouver dans un réservoir 6 connecté à ladite première section 2.

L'écoulement du fluide porteur chargé en particules est exécuté selon un premier débit. Le premier débit peut, par exemple, être imposé par un système de pompage 5 (ou une pompe) ou un système à air comprimé. Le système de pompage ou ledit système à air comprimé peut être connecté au réservoir 6 de manière à pousser le fluide porteur chargé en particules dans la première section 2.

Aussi, selon l'invention, le premier débit et le diamètre hydraulique de la première section 2 sont adaptés pour que des contraintes de cisaillement et de la cavitation soient générées au niveau du fluide porteur lors de son passage dans ladite première section 2.

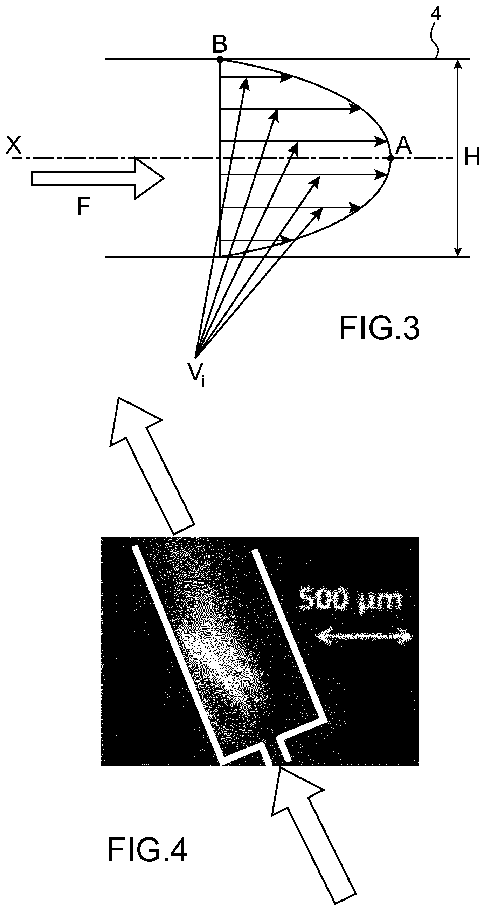

A cet égard, tel que représenté à la figure 3, nous décrivons l'apparition des contraintes de cisaillement dans le cadre d'un écoulement dit « écoulement laminaire ». Il est entendu que des contraintes de cisaillement apparaissent également dans un écoulement turbulent (par écoulement turbulent, nous entendons un écoulement qui n'est pas laminaire). En référence à la figure 3, dès lors qu'un fluide porteur s'écoule, selon le sens et la direction de la flèche F, dans un conduit 4 s'étendant selon un axe XX', une variation spatiale de la vitesse dudit fluide porteur peut être observée (la distribution des vitesses d'écoulement du fluide porteur dans le conduit 4 est illustrée à la figure 3 par les flèches Vᵢ). Ainsi, l'écoulement d'un fluide porteur dans un conduit 4, par exemple de forme tubulaire, présentera une vitesse d'écoulement plus importante au centre du conduit 4 (position A) qu'au niveau de la paroi dudit conduit 4 (position B). Nous disons qu'il se produit un cisaillement. Plus précisément, la vitesse du fluide porteur au centre du conduit 4 est maximale, tandis qu'elle est nulle au niveau des parois dudit conduit 4. Ainsi, dès lors que le fluide porteur est chargé en particules, les contraintes en cisaillement générées lors de l'écoulement du fluide porteur s'exercent sur les particules. L'amplitude des contraintes de cisaillement dépend de la viscosité du fluide porteur, de son débit, de la section de passage (la section de passage étant la section transversale du conduit 4) et de la hauteur caractéristique de l'écoulement (hauteur H représentée à la figure 3).

Par ailleurs, le diamètre hydraulique de la seconde section 3 du conduit 1 est adapté pour provoquer l'implosion des bulles de cavitation formées dans le fluide lors de son passage dans la première section 2 du conduit 1. Autrement dit, dès que les bulles de cavitation formées dans la première section 2 du conduit 1 pénètrent dans la seconde section 3 du conduit 1, une augmentation brusque de pression se produit (du fait du ralentissement de l'écoulement du fluide porteur au niveau de la seconde section 3), et provoque ainsi l'implosion desdites bulles de cavitation. Cette implosion s'accompagne d'une onde de choc qui se propage dans le conduit, et plus particulièrement dans la seconde section 3. Le diamètre hydraulique de la seconde section 3 peut être supérieur au diamètre hydraulique de la première section 2.

Par diamètre hydraulique, nous entendons quatre fois l'aire de la section transversale d'un conduit 1 divisé par le périmètre mouillé par le fluide de ladite section transversale. La section transversale d'un conduit 1 est définie par l'intersection d'un plan avec ledit conduit 1, le plan étant disposé selon une direction perpendiculaire à l'écoulement d'un fluide dans ledit conduit 1 (ou l'axe d'élongation du conduit). Ainsi, le diamètre hydraulique d'un tube de section circulaire correspond au diamètre de ladite section circulaire.

Lors de l'écoulement du fluide chargé en particules, les contraintes tangentielles (les contraintes tangentielles étant définies par le produit de la viscosité du fluide porteur par le taux de cisaillement) générées dans la première section 2 du conduit 1 s'exercent sur lesdites particules, de sorte qu'une exfoliation des particules peut être observée (l'intensité des contraintes tangentielles peut atteindre 1000 N.m⁻²). Nous notons que l'amplitude des contraintes de cisaillement s'exerçant sur les particules est fonction du gradient de vitesse du fluide porteur en écoulement selon une direction perpendiculaire à son écoulement (autrement dit perpendiculairement à la flèche représentée à la figure 1).

Ainsi, pour un cisaillement supérieur à 10⁺⁵ s⁻¹, il est possible d'exfolier des particules de graphite, et ainsi de former des particules de graphène d'une épaisseur inférieure à 20 nm, avantageusement les particules de graphène obtenues par le procédé selon l'invention sont des feuillets d'épaisseur mono atomique.

L'implosion des bulles de cavitation, dans la seconde section 3 du conduit 1, génère une contrainte supplémentaire qui s'exerce sur les particules. En effet, l'implosion des bulles de cavitation provoque une onde de choc, qui se propage dans le conduit 1, et qui accentue l'exfoliation des particules amorcée par les contraintes de cisaillement dans la première section 2 du conduit 1. Ainsi, au moment de leur traversée du conduit 1, les particules sont alors soumises à la combinaison des contraintes dues au cisaillement et des contraintes générées par l'onde de choc.

Par ailleurs, la première section 2, du fait de son faible diamètre hydraulique, représente un volume confiné, par rapport à ce qui est connu de l'état de la technique. Ce confinement impose alors un plus grand nombre de bulles de cavitation, et de taille plus petite par rapport à l'état de l'art. Ainsi, l'implosion de chaque bulle de cavitation crée, du fait de la petite taille de ladite bulle, une onde de choc de moindre intensité par rapport à l'état de la technique. Par conséquent, ladite onde de choc permet d'assister l'exfoliation due au cisaillement, sans pour autant briser les plans exfoliés (les plans de graphène par exemple). Il est ainsi possible d'obtenir des particules exfoliées de plus grande taille que celles obtenues par les procédés connus de l'état de la technique (par plus grande taille nous entendons plus grande étendue selon le plan d'exfoliation). La qualité des particules exfoliées s'en trouve améliorée.

L'implosion des bulles de cavitation permet ainsi d'améliorer le rendement du procédé d'exfoliation. Nous associons le rendement du procédé d'exfoliation à la quantité de particules exfoliées (par exemple du graphène) en fonction de la quantité de particules (par exemple de graphite) sur laquelle le procédé est appliqué.

Par quantité de particules, nous entendons une masse.

Selon l'invention, le diamètre hydraulique de la première section 2 est inférieur à 300 µm, de préférence inférieur à 150 µm, encore plus préférentiellement inférieur à 90 µm.

Par exemple, la première section 2 du conduit 1 peut être un tube dont le diamètre est égal à 80 µm. Selon un autre exemple, la première section 2 peut présenter une section transversale rectangulaire de 100 µm de hauteur, et de 80 µm de largeur (le diamètre hydraulique est dans ce cas égal à 89 µm). Selon un exemple supplémentaire, la première section 2 peut présenter une section trapézoïdale, de grande base de 1000 µm, de petite base de 790 µm, et de côtés de 64 µm (ce qui correspond à un diamètre hydraulique de 108 µm, et un rapport d'aspect de 19).

Pour un tel diamètre hydraulique de la première section 2 du conduit 1, la pression à appliquer au fluide porteur, pour générer des contraintes de cisaillement et de la cavitation dans ladite première section 2, peut être inférieure à 30 bars, préférentiellement inférieure à 10 bars, par exemple comprise entre 5 et 9 bars, préférentiellement entre 6 et 8 bars. Ainsi, pour de telles pressions, il n'est pas nécessaire de mettre en œuvre des systèmes de pompage compliqués, et dont l'entretien est coûteux.

Par exemple, une pompe d'une puissance inférieure à 5 kW, et permettant d'imposer une pression inférieure à 35 bars, peut permettre de mettre en œuvre le procédé d'exfoliation selon l'invention.

Par ailleurs, un diamètre hydraulique de la première section 2 inférieur à 300 µm, de préférence inférieur à 150 µm rend l'effet combiné des contraintes de cisaillement et de l'onde de choc associée à l'implosion de bulles de cavitation plus efficace que les procédés connus de l'état de la technique.

En effet, la première section 2 du conduit 1 constitue un environnement plus confiné que celui décrit dans le document CN 102249222. Par ailleurs, contrairement à la présente invention, le dispositif décrit dans le document CN 102249222 ne permet pas de réaliser un écoulement laminaire.

De manière particulièrement avantageuse, le fluide porteur présente une viscosité supérieure à 1 mPa.s, par exemple, le fluide porteur comprend au moins un des éléments choisi parmi : eau, un mélange d'eau et d'isopropanol.

Par ailleurs, étant donnée la faible quantité de fluide porteur pour la mise en œuvre du procédé selon l'invention, des fluides porteurs toxiques peuvent être utilisés, comme par exemple : toluène, acétone, N - Méthyle - 2 - pyrolidone (NMP).

De manière particulièrement avantageuse, l'écoulement du fluide porteur dans la première section 2 peut être laminaire. Par écoulement laminaire, nous entendons un écoulement où des couches de fluide « glissent » les unes par rapport aux autres, la vitesse de chacune décroissant du centre de la canalisation vers les parois, sans qu'il y ait de mélange de matière entre les couches. Ainsi, la mise œuvre d'un écoulement laminaire conjugué à un très fort taux de cisaillement permet d'augmenter de façon significative les contraintes de cisaillement et par conséquent d'améliorer le rendement du procédé. Cet ensemble de conditions, dans une première section 2 présentant un diamètre hydraulique inférieur à 90 µm, peut être mis en œuvre en imposant, avec un système de pompage, une pression typiquement comprise entre 5 et 15 bars suivant la viscosité du fluide considéré.

L'invention concerne également un second mode de réalisation qui reprend pour l'essentiel les caractéristiques du premier mode de réalisation décrit ci avant. Dans ce second mode de réalisation, l'écoulement dans la seconde section est laminaire, mais ne l'est pas nécessairement dans la première section.

Le procédé selon l'invention permet d'envisager l'intégration de conduits 1 sur des puces (« Chip » selon la terminologie Anglo-Saxonne). Le dispositif pour la mise en œuvre du procédé d'exfoliation selon l'invention est peu encombrant. Ledit dispositif peut, par ailleurs, être fabriqué par des techniques de micro fabrication bien connues de l'homme du métier, et très répandues dans les salles banches destinées à la fabrication de dispositifs microélectronique ou MEMS. Le pilotage sur puce de la température du conduit 1 permet d'augmenter facilement la valeur de la pression saturante du fluide porteur, c'est-à-dire l'intensité de la cavitation. Il en résulte une augmentation du rendement de la délamination, avec un dispositif peu encombrant, intégrable dans une chaîne de production ou dans une salle blanche. Les techniques de micro fabrication permettent d'envisager une production de microréacteurs (une pluralité de conduits 1) disposés en parallèle, l'ensemble pouvant traiter une quantité de fluide porteur conséquente.

L'augmentation du rendement permettra aussi de traiter moins de fluide porteur, et par exemple de travailler avec des suspensions dispersées dans un liquide plus visqueux que l'eau pour augmenter la contrainte tangentielle subie par les particules.

Un exemple de mise en œuvre de l'invention est donné à la figure 4. Le conduit est formé sur un substrat de silicium par des techniques de gravure.

La première section 2 est d'une largeur de 50 µm et d'une profondeur de 150 µm (ce qui correspond à un diamètre hydraulique de 75 µm).

La seconde section 3 est d'une largeur de 500 µm et d'une hauteur de 150 µm.

Le fluide porteur comprend de l'eau.

Une pompe ou un système à air comprimé est employé pour générer un débit de fluide porteur de 1 litre par heure.

La mise en œuvre du procédé selon l'exemple de la figure 4 permet d'atteindre un rendement de quelques pourcents.

La présente invention a été mise en œuvre pour l'exfoliation de particules de graphite de dimension nominale de 20 µm en solution aqueuse.

La concentration des particules était de 10mg/ml.

La solution aqueuse comprenait également du sodium cholate comme surfactant à une concentration de 0,2 mg/ml.

La solution a par la suite été traitée par un dispositif conforme à ce qui a pu être décrit précédemment.

Dans cet exemple particulier, la première section 2 et la deuxième section 3 présentaient, respectivement, un diamètre hydraulique de 230 µm et de 540 µm.

La pression imposée au fluide porteur s'écoulant selon le premier débit dans la première section était de 4 bars.

Après 174 heures de traitement, considérant que 6 minutes de traitement correspondent à un cycle, la solution a été centrifugée de manière à séparer les particules exfoliées du fluide porteur.

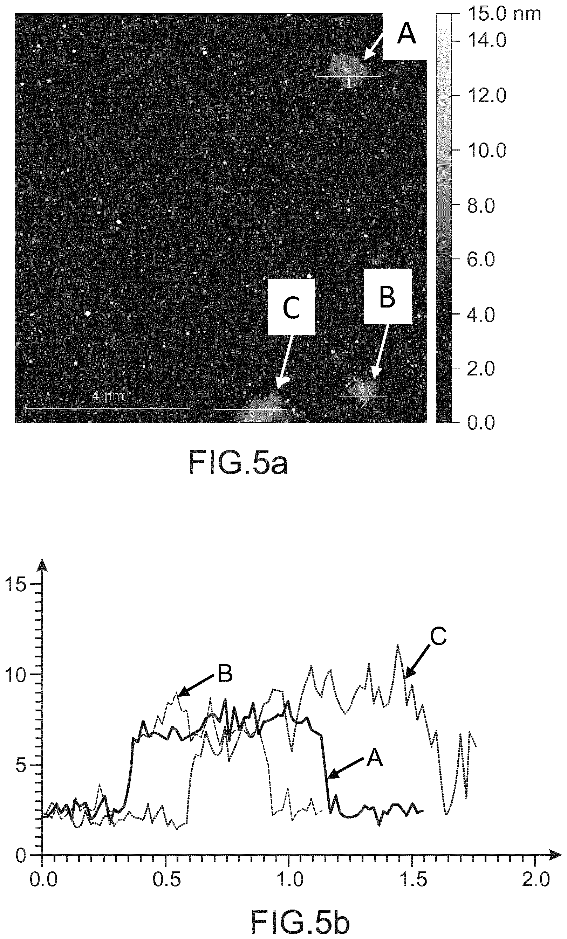

La figure 5a est une image de particules exfoliées (positions A, B, et C) obtenue par microscopie à force atomique (AFM), tandis que le graphique 5b représente un profil desdites particules. Les particules exfoliées A, B et C ont une épaisseur inférieure à 10 nm, et une étendue comprise entre 500 nm et 1 µm.

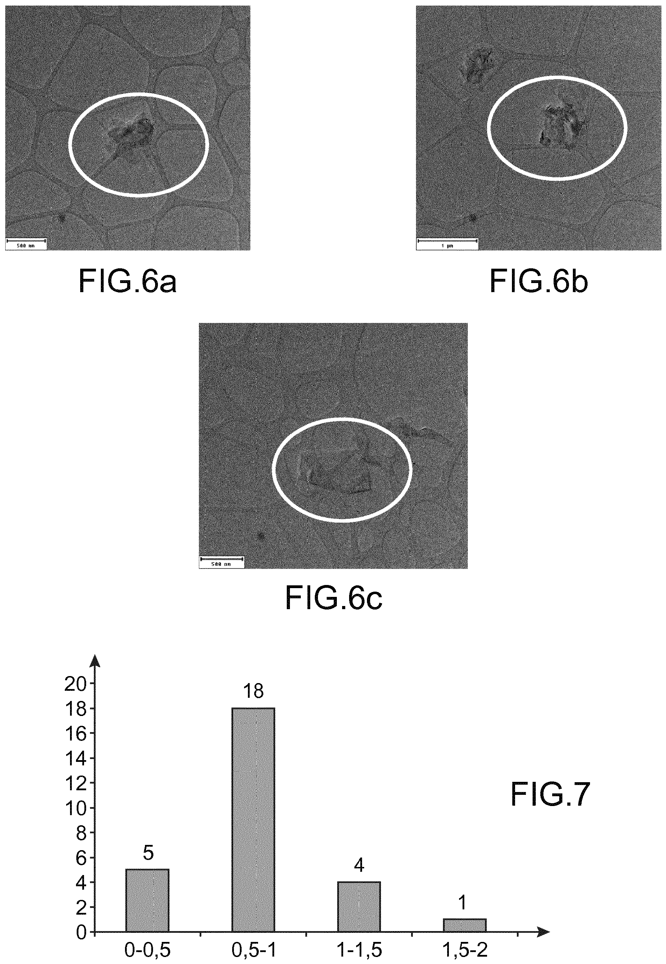

Les figures 6a à 6c sont des images, obtenues par microscopie électronique à transmission (TEM), de particules exfoliées. Les images obtenues par cette technique permettent de faire une analyse statistique des particules exfoliées, et en particulier d'établir une distribution selon la taille (leur étendue) desdites particules.

Ainsi, la figure 7 est une représentation graphique du nombre de particules (selon l'axe vertical) en fonction de leur taille (selon l'axe horizontal en µm).

On observe très clairement sur ce graphique que les particules présentant une taille comprise entre 0,5 µm et 1 µm sont majoritairement présentes.

Les résultats expérimentaux ainsi obtenus permettent de conclure sur l'efficacité du procédé d'exfoliation selon la présente invention, et en particulier sur la possibilité d'obtenir des particules exfoliées selon une distribution de taille homogène.

L'invention concerne également un dispositif d'exfoliation de particules comportant un conduit 1, le conduit 1 comprend une première section 2, et une deuxième section 3 reliées de manière étanche de sorte qu'un fluide puisse s'écouler de la première section 2 vers la seconde section 3, la première section 2 présentant un premier diamètre hydraulique, et la seconde section 3 présentant un second diamètre hydraulique supérieur au premier diamètre hydraulique, le premier diamètre hydraulique étant inférieur à 150 nm, de préférence inférieur à 90 µm, encore plus préférentiellement inférieur à 80 µm.

Un tel conduit 1 peut être obtenu entre autres par des techniques de micro fabrication comprenant :
- la fourniture d'un substrat de silicium (par exemple un substrat de silicium nitruré i.e. : comprenant une couche de nitrure de silicium sur sa surface), ou un substrat de silicium sur isolant (ledit substrat comprenant une couche de silicium de 150 µm (ou 300 µm) d'épaisseur),
- la définition d'un motif représentant le conduit 1 par des techniques de photolithographie,
- la gravure sèche (par plasma) ou liquide (avec du KOH ou du TMAH) du motif défini lors de l'étape de photolithographie, de manière à créer une cavité dans la couche de silicium, ladite cavité étant destinée à former le conduit 1,
- le collage par scellement anodique d'un substrat de borosilicate (par exemple un substrat en PYREX connu sous la référence Corning 7740 de la société Corning, le substrat en PYREX peut être préalablement percé pour assurer l'écoulement du fluide porteur) sur la couche de silicium de manière à fermer la cavité, et former le conduit 1.

Une pompe 5 peut être connectée au conduit 1, ladite pompe 5 étant adaptée pour générer un écoulement d'un fluide de la première section 2 vers la seconde section 3.

## Revendications

1. Procédé d'exfoliation de particules, le procédé comprend l'écoulement, selon un premier débit, d'un fluide porteur chargé en particules, dans une première section (2), puis dans une deuxième section d'un conduit (1), la première section (2) et la deuxième section étant contiguës, le premier débit étant adapté pour générer des contraintes de cisaillement et des bulles de cavitation dans le fluide porteur chargé en particules lors de son passage dans la première section (2) du conduit (1), la seconde section (3) du conduit (1) présentant un diamètre hydraulique adapté pour provoquer une implosion des bulles de cavitation dès lors que le fluide porteur chargé en particules débouche de la première section (2) et s'écoule dans la seconde section (3), de sorte qu'une exfoliation des particules soit provoquée sous l'action combinée des contraintes de cisaillements et d'une onde de choc générée par l'implosion des bulles de cavitation,
le procédé étant **caractérisé en ce que** la première section (2) du conduit (1) présente un diamètre hydraulique inférieur à 300 µm, de préférence inférieur à 150 µm, encore plus préférentiellement inférieur à 90 µm, et **en ce que** le premier débit est adapté pour que l'écoulement du fluide porteur chargé en particules dans la première section (2) soit laminaire.

2. Procédé selon la revendication 1, dans lequel la première section de conduit (2) présente une section transversale de forme allongée de rapport d'aspect supérieur à 3.

3. Procédé selon la revendication 1 ou 2, dans lequel le premier débit est adapté pour que les bulles de cavitation formées dans le fluide porteur chargé en particules présentent une taille inférieure à 50 µm.

4. Procédé selon l'une des revendications 1 à 3, dans lequel le fluide porteur a une viscosité supérieure à 1 mPa.s, par exemple, le fluide porteur comprend au moins un des éléments choisi parmi : eau, un mélange d'eau et d'isopropanol, NMP, acétone, toluène.

5. Procédé selon l'une des revendications 1 à 4, dans lequel les particules comprennent au moins un des éléments choisi parmi : graphite, dichalcogénures de métaux de transition.

6. Procédé selon l'une des revendications 1 à 5, dans lequel le premier débit est supérieur à 1 litre par heure.

7. Procédé selon l'une des revendications 1 à 6, dans lequel la section transversale de la première section (2) de conduit (1) est circulaire ou rectangulaire, ou triangulaire, ou trapézoïdale.

8. Procédé selon l'une des revendications 1 à 7, dans lequel la première section (2) présente une longueur inférieure à 5 mm.

9. Dispositif d'exfoliation de particules comportant un conduit (1), le conduit (1) comprenant une première section (2), et une deuxième section (3) reliées de manière étanche de sorte qu'un fluide puisse s'écouler de la première section (2) vers la seconde section (3), la première section (2) présentant un premier diamètre hydraulique, et la seconde section (3) présentant un second diamètre hydraulique supérieur au premier diamètre hydraulique, le premier diamètre hydraulique étant inférieur à 300 µm, de préférence inférieur à 150 µm, encore plus préférentiellement inférieur à 90 µm, et la première section de conduit (2) présente une section transversale de forme allongé de rapport d'aspect supérieur à 3.

10. Dispositif selon la revendication 9, dans lequel une pompe (5) est connectée au dispositif, ladite pompe (5) étant adaptée pour générer un écoulement d'un fluide de la première section (2) vers la seconde section (3).

## Patentansprüche

1. Verfahren zum Abschuppen von Partikeln, wobei das Verfahren das Strömen, gemäß einer ersten Durchflussmenge, einer mit Partikeln geladenen Trägerflüssigkeit in einer ersten Sektion (2), danach in einer zweiten Sektion einer Leitung (1) umfasst, wobei die erste Sektion (2) und die zweite Sektion angrenzend sind, wobei die erste Durchflussmenge angepasst ist, um Scherbeanspruchungen und Kavitationsblasen in der mit Partikeln geladenen Trägerflüssigkeit bei deren Durchgang in der ersten Sektion (2) der Leitung (1) zu generieren, wobei die zweite Sektion (3) der Leitung (1) einen Hydraulikdurchmesser aufweist, der angepasst ist, um für eine Implosion der Kavitationsblasen zu sorgen, sobald die mit Partikeln geladene Trägerflüssigkeit aus der ersten Sektion (2) mündet und in die zweite Sektion (3) strömt, sodass ein Abschuppen der Partikel durch die kombinierte Wirkung der Scherbeanspruchungen und einer Stoßwelle hervorgerufen wird, die durch die Implosion der Kavitationsblasen generiert wird,
wobei das Verfahren **dadurch gekennzeichnet ist, dass** die erste Sektion (2) der Leitung (1) einen Hydraulikdurchmesser von weniger als 300 µm, vorzugsweise kleiner als 150 µm, noch bevorzugter von kleiner als 90 µm aufweist, und dadurch, dass die erste Durchflussmenge angepasst ist, damit die Strömung der mit Partikeln geladenen Trägerflüssigkeit in der ersten Sektion (2) laminar ist.

2. Verfahren nach Anspruch 1, wobei die erste Leitungssektion (2) einen Querschnitt in länglicher Form im Seitenverhältnis von mehr als 3 aufweist.

3. Verfahren nach Anspruch 1 oder 2, wobei die erste Durchflussmenge angepasst ist, damit die in der mit Partikeln geladenen Trägerflüssigkeit gebildeten Kavitationsblasen eine Größe von weniger als 50 µm aufweisen.

4. Verfahren nach einem der Ansprüche 1 bis 3, wobei die Trägerflüssigkeit eine Viskosität von mehr als 1 mPa.s aufweist, die Trägerflüssigkeit beispielsweise mindestens eines der Elemente umfasst, ausgewählt aus: Wasser, einem Gemisch aus Wasser und Isopropanol, NMP, Aceton, Toluen.

5. Verfahren nach einem der Ansprüche 1 bis 4, wobei die Partikel mindestens eines der Elemente umfassen, ausgewählt aus: Grafit, Übergangsmetall-Dichalcogeniden.

6. Verfahren nach einem der Ansprüche 1 bis 5, wobei die erste Durchflussmenge größer als 1 Liter pro Stunde ist.

7. Verfahren nach einem der Ansprüche 1 bis 6, wobei der Querschnitt der ersten Sektion (2) einer Leitung (1) kreisförmig oder rechteckig, oder dreieckig oder trapezförmig ist.

8. Verfahren nach einem der Ansprüche 1 bis 7, wobei die erste Sektion (2) eine Länge von weniger als 5 mm aufweist.

9. Vorrichtung zum Abschuppen von Partikeln, eine Leitung (1) beinhaltend, wobei die Leitung (1) eine erste Sektion (2) und eine zweite Sektion (3) umfasst, die in dichter Form verbunden sind, sodass eine Flüssigkeit von der ersten Sektion (2) zur zweiten Sektion (3) strömen kann, wobei die erste Sektion (2) einen ersten Hydraulikdurchmesser aufweist, und die zweite Sektion (3) einen zweiten Hydraulikdurchmesser aufweist, der größer als der erste Hydraulikdurchmesser ist, wobei der erste Hydraulikdurchmesser kleiner als 300 µm, vorzugsweise kleiner als 150 µm, noch bevorzugter kleiner als 90 µm ist, und die erste Leitungssektion (2) einen Querschnitt in länglicher Form im Seitenverhältnis von mehr als 3 aufweist.

10. Vorrichtung nach Anspruch 9, wobei eine Pumpe (5) an die Vorrichtung angeschlossen ist, wobei die Pumpe (5) angepasst ist, um eine Strömung einer Flüssigkeit von der ersten Sektion (2) zur zweiten Sektion (3) zu generieren.

## Claims

1. A method for exfoliating particles, the method comprises flowing, at a first flow rate, a carrier fluid loaded with particles, in a first section (2), then in a second section of a conduit (1), the first section (2) and the second section being contiguous, the first flow rate being adapted to generate shear stresses and cavitation bubbles in the carrier fluid loaded with particles during its passage through the first section (2) of the conduit (1), the second section (3) of the conduit (1) having a hydraulic diameter adapted to cause an implosion of the cavitation bubbles as soon as the carrier fluid loaded with particles emerges from the first section (2) and flows into the second section (3), so that an exfoliation of the particles is caused under the combined action of shear stresses and a shock wave generated by the implosion of the cavitation bubbles,
the method being **characterised in that** the first section (2) of the conduit (1) has a hydraulic diameter less than 300 µm, preferably less than 150 µm, even more preferably less than 90 µm, and **in that** the first flow rate is adapted so that the flowing of the carrier fluid loaded with particles in the first section (2) is laminar.

2. The method according to claim 1, wherein the first conduit section (2) has a cross-section of elongated shape with an aspect ratio greater than 3.

3. The method according to claim 1 or 2, wherein the first flow rate is adapted so that the cavitation bubbles formed in the carrier fluid loaded with particles have a size less than 50 µm.

4. The method according to one of claims 1 to 3, wherein the carrier fluid has a viscosity greater than 1 mPa.s, for example, the carrier fluid comprises at least one of the elements selected from: water, a mixture of water and isopropanol, NMP, acetone, toluene.

5. The method according to one of claims 1 to 4, wherein the particles comprise at least one of the elements selected from: graphite, transition metal dichalcogenides.

6. The method according to one of claims 1 to 5, wherein the first flow rate is greater than 1 litre per hour.

7. The method according to one of claims 1 to 6, wherein the cross-section of the first section (2) of conduit (1) is circular or rectangular, or triangular, or trapezoidal.

8. The method according to one of claims 1 to 7, wherein the first section (2) has a length less than 5 mm.

9. A particle exfoliation device comprising a conduit (1), the conduit (1) comprising a first section (2), and a second section (3) sealingly connected so that a fluid can flow from the first section (2) to the second section (3), the first section (2) having a first hydraulic diameter, and the second section (3) having a second hydraulic diameter greater than the first hydraulic diameter, the first hydraulic diameter being less than 300 µm, preferably less than 150 µm, even more preferably less than 90 µm, and the first conduit section (2) has a cross-section of elongated shape with an aspect ratio greater than 3.

10. The device according to claim 9, wherein a pump (5) is connected to the device, said pump (5) being adapted to generate a flowing of a fluid from the first section (2) to the second section (3).
